# EUROPEAN PATENT APPLICATION

(11) **EP 2 784 572 A1**
(43) Date of publication of application: **01.10.2014**
(21) Application number: 14161008.9
(22) Date of filing: 21.03.2014
(51) Int. Cl.: G02B 27/01, G09G 3/02

(54) **Head-up display device and display method of head-up display device**

(30) Priority: 29.03.2013 JP 2013071471
(71) Applicant: Funai Electric Co., Ltd., Daito city Osaka 574-0013 (JP)
(72) Inventor: Hashimoto, Masahiro, Osaka Osaka 574-0013 (JP)
(74) Representative: Osha Liang SARL

(57) **Abstract**

A head-up display device (100, 100a) includes a projection unit (11) configured to project predetermined information on a transparent display panel (2a) by superimposing on a background (400) that is visible to a user viewing the transparent display panel (2a) placed in front of a line of sight of the user. The head-up display device (100, 100a) may also include three light sources (13a, 13b, 13c) configured to emit lights of differing colors onto the transparent display panel (2a), a detection unit (17) configured to detect a background color that is visible when viewing the transparent display panel (2a), and a controller (18) configured to control a display of the predetermined information (300) using a display color in correspondence to the background color detected by the detection unit (17).

## Description

### [Field of the Invention]

The present invention relates to a head-up display device and display method of the head-up display device.

### [Background Art]

A projector provided with a projection unit for projecting predetermined information such as an image or text is known.

Japanese Unexamined Patent Application Publication No. 2012-215755 discloses a projector provided with a plurality of light sources and a projection lens (projection unit) that projects predetermined information such as images and text onto a screen by light emitted from the plurality of light sources. This projector is configured so as to project predetermined information with light of a specific color that is set in advance and configured by a combination of lights in a plurality of colors emitted from the plurality of light sources. Further, this projector is configured so as to suppress a change in color balance of the specific color by reducing the amount of power supplied to a light source having early degradation when early degradation occurs in any one laser light source among the plurality of the light sources. Furthermore, it is considered in Japanese Unexamined Patent Application Publication No. 2012-215755, though not clearly specified, that when a predetermined light source among the plurality of light sources is no longer able to emit the desired light due to degradation or failure, the projector is no longer able to configure the specific color that has been set in advance so the predetermined information is displayed in an unintended displayed color that differs from the specific color.

Also, a head-up display device comprising a transparent display panel in front of the line of sight of a user that projects predetermined information superimposed in the background that is visible by the user via the transparent display panel is conventionally known as an application example of a projector.

However, in such a head-up display device as that described above, the background that is visible to the user via the transparent display panel changes, and the predetermined information is projected by superimposing on the changing background. Therefore, when the predetermined light source among the plurality of light sources is no longer able to emit the desired light due to degradation or failure as in the projector described in Japanese Unexamined Patent Application Publication No. 2012-215755, it is presumable that the predetermined information is displayed in an unintended display color that differs from the specific color regardless of the color of the changing background. Accordingly, the color of the background and unintended display color of the predetermined information may be a similar color (like color) depending on the color of the background, and in such case, it is considered that this may generate problems in the visibility of the predetermined information.

### [Summary of the Invention]

One or more embodiments of the present invention provide a head-up display device and a display method of the head-up display device that can suppress problematic visibility of predetermined information when the color of the background changes even when a predetermined light source is no longer able to emit a desired light.

A head-up display device according to one or more embodiments of the present invention may comprise a projection unit configured to project predetermined information on a transparent display panel by superimposing on a background that is visible to a user viewing the transparent display panel placed in front of a line of sight of the user; three (or more) light sources configured to emit lights of differing colors onto the transparent display panel, wherein one of the three light sources is a predetermined light source; a detection unit , as for example a camera, configured to detect a background color that is visible when viewing the transparent display panel; and a controller configured to control a display of the predetermined information using a display color in correspondence to the background color detected by the detection unit, using a light source other than the predetermined light source when the predetermined light source is no longer able to emit a desired light. The head-up display device according to one or more embodiments of the present invention indicates not only those being mounted in transportation equipment such as automobiles, aircrafts and the like, but is a broad concept that also includes those which can be placed in front of the line of sight of a user by wearing on the head of a user. Further, in one or more embodiments of the present invention, the transparent display panel indicates not only a transparent display panel with a panel shape, but is a broad concept that also includes a windshield of transportation equipment such as automobiles, aircrafts, and the like. Further, in one or more embodiments of the present invention, transparency is not limited to transparency but is a broad concept that also includes semitransparency.

The head-up display device according to one or more embodiments of the present invention can, for example, change the display color of the predetermined information to a display color that is easily visible against a changing background color by using a light source other than the predetermined light source even when the predetermined light source is no longer able to emit the desired light by controlling the display of the predetermined information in a display color based on the color of the background (background color) detected by the detection unit by using a light source other than the predetermined light source within three or more light sources. Accordingly, for example, even when the predetermined light source is no longer able to emit the desired light when the background color changes, it can suppress problematic visibility of the predetermined information. The head-up display device according to one or more embodiments may be configured so that the controller may control the display of the predetermined information using a display color of a different color system from the background color in correspondence to the background color detected by the detection unit, using the light source other than the predetermined light source when the predetermined light source is no longer able to emit a desired light. According to the configuration in this manner, for example, when the predetermined light source is no longer able to emit the desired light, the display color of the predetermined information is changed to a display color of a different color system where a visual difference is more emphasized against the changed background color. Therefore, for example, even when the predetermined light source is no longer able to emit the desired light when the background color changes, the predetermined information can be displayed with the display color easily recognized visually.
In one or more embodiments of the present invention, the three light sources may emit at least a first color, a second color, and third color of light, respectively, and when the predetermined light source is no longer able to emit a desired light, the controller may classify the background color detected by the detection unit into color systems of one of the first color, the second color, and the third color, and determines the display color of the predetermined information to be any one of the first color, the second color, and the third color that differs from that of the classified background color. According to the configuration in this manner, for example, even when any one color within the first color, the second color, and third color is no longer able to emit the desired light caused by an inability to emit the desired light by the predetermined light source, the color of the background is classified into any color system of the first color, the second color, and the third color. Therefore, for example, the predetermined information can be easily displayed with the display color of a different color system from the background color.

In one or more embodiments of the claimed invention, the controller may separate the background color detected by the detection unit into color components of the first color, the second color, and classifies the third color and the background color detected by detection unit the into one of the color systems of the first color, the second color, and the third color based on a relationship between a contrast and a color level of the first color, the second color, and the third color. According to the configuration in this manner, for example, the color system of the color of the background can be easily determined based on the relationship between the contrast and the color level of each of the color components of the first color, the second color, and the third color.
In one or more embodiments of the claimed invention, the controller may control the display of the predetermined information using the display color of the color system having a larger wavelength when display colors of a plurality of color systems that differ from the classified background color within the colors of the first color, second color, and third color is displayable. According to the configuration in this manner, for example, when the predetermined light source is no longer able to emit the desired light, the predetermined information is preferentially displayed with the display color of the color system having higher visibility and greater wavelength within the display colors of the color system that differs from the background. Therefore, for example, the visibility of the predetermined information can be improved when the predetermined light source is no longer able to emit the desired light.
In the configuration of displaying the predetermined information with the display color of the color system different from the background color according to one or more embodiments of the present invention, when the predetermined light source is no longer able to emit a desired light, the controller may control the display to display the foundation by superimposing in the display color the same color system as that of the background detected by the detection unit, using the light source other than the predetermined light source and wherein the predetermined information is displayed using the display color of the color system that differs from the background color by superimposing on the foundation. According to the configuration in this manner, for example, the visibility of the predetermined information can be improved when the predetermined light source is no longer able to emit the desired light because the predetermined information displayed can be emphasized in a display color different from the background color due to the foundation of the color system being the same as the background color.
In the configuration of displaying the predetermined information with the display color of the color system different from the background color according to one or more embodiments of the present invention, when the predetermined light source is no longer able to emit a desired light, the controller may control the control to display the predetermined information while sequentially changing display colors in the color system that differs from the background color detected by the detection unit, using the light source other than the predetermined light source. According to the configuration in this manner, for example, even when the predetermined light source is no longer able to emit the desired light, the user can visually recognize the predetermined information more reliably because the display color of the predetermined information changes sequentially against the changing background color.
A method for displaying the head-up display device according to one or more embodiments of the present invention may comprise projecting the predetermined information on a transparent display panel by superimposing on a background that is visible to a user via the transparent panel placed in front of the line of sight of the user, and displaying the predetermined information in a display color based on the detected background color by using a light source other than a predetermined light source within the three or more light sources when the determined light source within three or more light sources is no longer able to emit the desired light. The head-up display device in one or more embodiments of the present invention indicates not only those being mounted in transportation equipment such as automobiles, aircrafts and the like, but is a broad concept that also includes those which can be placed in front of the line of sight of a user by wearing on the head of a user. Further, in one or more embodiments of the present invention, the transparent display panel indicates not only a transparent display panel with a panel shape, but is a broad concept that also may include a windshield of transportation equipment such as automobiles, aircrafts, and the like. Further, in one or more embodiments of the present invention, transparency is not limited to transparency but is a broad concept that also may include semitransparency.
The display method of the head-up display device according to one or more embodiments of the present invention may change the display color of the predetermined information to a display color that is easily visible against the changing background color by using a light source other than the predetermined light source, even when the predetermined light source is no longer able to emit the desired light, by providing the step that displays the predetermined information in a display color based on the color of the detected background color by using a light source other than the predetermined light source within the three or more light sources. Accordingly, for example, even when the predetermined light source is no longer able to emit the desired light when the background color changes, it can suppress problematic visibility of the predetermined information.

One or more embodiments, of the present invention may suppress problematic visibility of predetermined information as described above when the color of the background changes and even when a predetermined light source is no longer able to emit a desired light.

### [Brief Description of the Drawings]

FIG. 1 is a diagram illustrating a use state of a HUD device according to one or more embodiments of the present invention.
FIG. 2 is a diagram illustrating predetermined information projected on a windshield of the HUD device according to one or more embodiments of the present invention.
FIG. 3 is a block diagram illustrating a configuration of the HUD device according to one or more embodiments of the present invention.
FIG. 4 is a histogram illustrating an R (red) component of a background color in the HUD device according to one or more embodiments of the present invention.
FIG. 5 is a histogram illustrating a G (green) component of a background color in the HUD device according to one or more embodiments of the present invention.
FIG. 6 is a histogram illustrating a B (blue) component of a background color in the HUD device according to the one or more embodiments of the present invention.
FIG. 7 is a flowchart describing a display color change process of the HUD device according to one or more embodiments of the present invention.
FIG. 8 is a diagram illustrating a foundation and predetermined information projected on the windshield of the HUD device according to one or more embodiments of the present invention.
FIG. 9 is a flowchart describing a display color change process of the HUD device according to one or more embodiments of the present invention.
FIG. 10 is a flowchart describing a display color change process of the HUD device according to one or more embodiments of the present invention.
FIG. 11 is a diagram illustrating a cycle of the display color change when sequentially changing with two colors of a different color system and a similar color as the background color in the HUD device one or more embodiments of the present invention.
FIG. 12 is a diagram illustrating a cycle of the display color change when sequentially changing with two colors that are different color systems from the background color in the HUD device according to one or more embodiments of the present invention.
FIG. 13 is a diagram illustrating a HUD device according to one or more embodiments of the present invention.

### [Detailed Description of the Embodiments]

Detailed examples of the present invention are described below with reference to the drawings.

### (First Example)

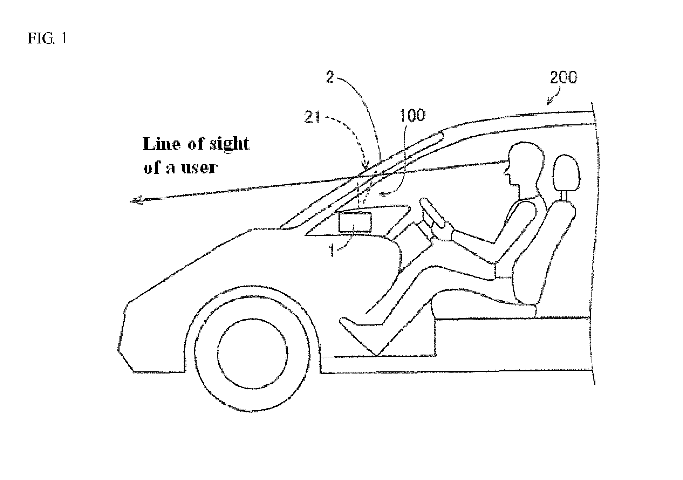

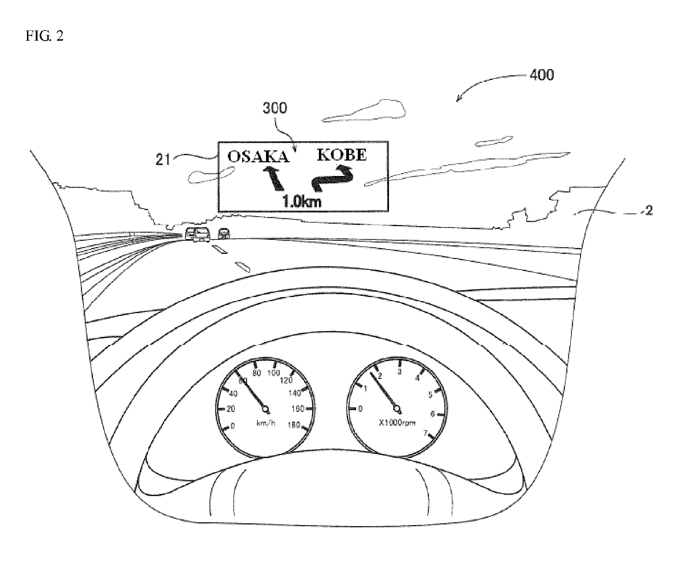

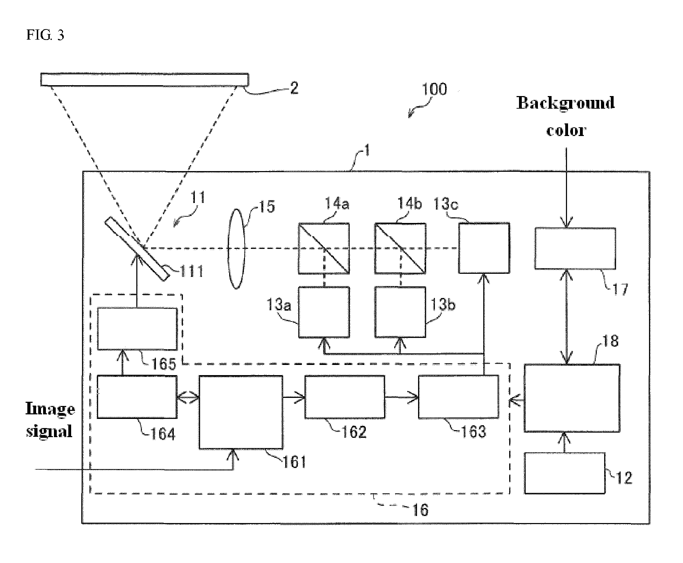

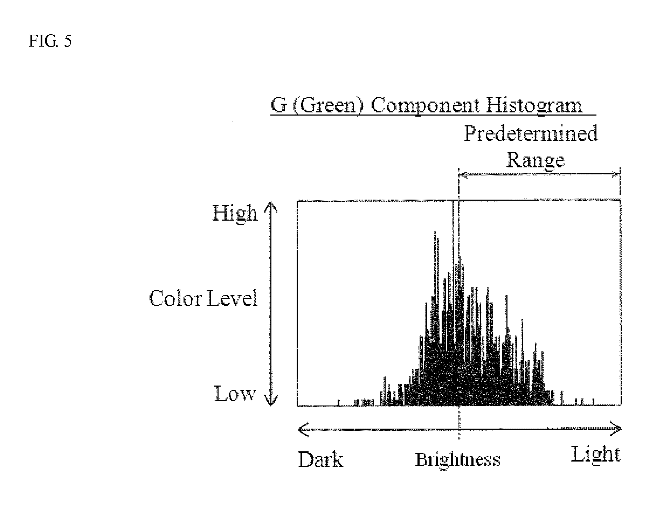

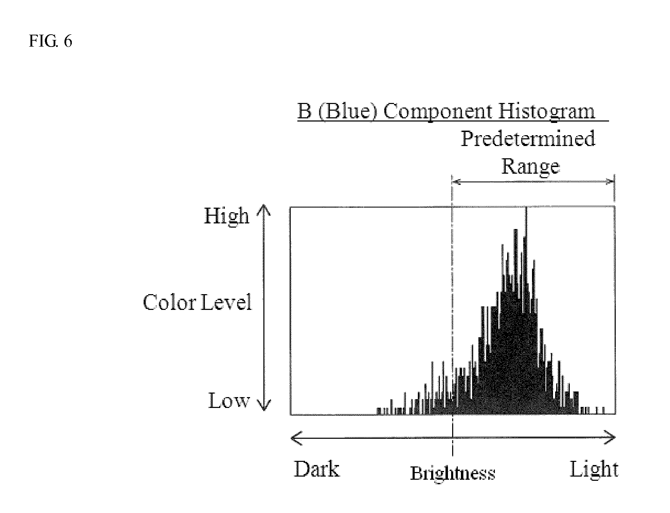

A configuration of a HUD (head-up display) device 100 according to one or more embodiments of the present invention will be described with reference to FIGS. 1 to 6.
The HUD device 100 according one or more embodiments of the present invention, as illustrated in, for example, FIG. 1, may be built in (mounted) to a vehicle 200. Further, the HUD device 100 may include a projector unit 1 that projects information. The HUD device 100 may be configured, as illustrated in, for example, FIG. 2, so that predetermined information 300 given to inform a user of route information according to a car navigation system, fuel consumption information of the vehicle, and the like, may be displayed on a windshield 2 disposed in front of the line of sight of the user. Furthermore, the predetermined information 300 may be displayed in the display region 21 of the windshield 2 and set in a default color (for example, bluish green) in the initial state. Moreover, the predetermined information 300 may be displayed by superimposing on a background 400 viewed by the user via the windshield 2 within the display region 21. Moreover, the HUD device 100 may be differed from a projector device that projects on a stationary screen, and because the predetermined information 300 may be projected on the display region 21 of the windshield 2, it has a feature that the color of the background 400 (background color) changes frequently. The windshield 2 is an example of "a transparent display panel" of the present invention.
In addition, the projector unit 1, and thus the HUD device 100 may comprise, as illustrated in, for example, FIG. 3, a laser light scanner 11 that projects the predetermined information 300 on the windshield 2 by superimposing on the background 400, an operation part 12 that accepts an operation instruction from the user for the projector unit 1, three laser light sources 13a, 13b, and 13c (blue (B), green (G), and red (R)), two beam splitters 14 a and 14b, a lens 15, a display controller 16, a camera 17 that detects a color of the background 400 viewed by the user, and a main CPU 18 that controls each part of the projector unit 1. The laser light scanner 11 may be an example of the "projection unit" of the present invention, and the laser light sources 13a, 13b, and 13c are respectively an example of the "light source" of the present invention. Further, the camera 17 is an example of the "detection unit" of the present invention, and the main CPU 18 is an example of the "controller" of the present invention.

The laser light scanner 11 may comprise a MEMS (micro electro mechanical system) mirror 111 and may be configured so that the lights emitted from three laser light sources 13a, 13b, and 13c are scanned by the MEMS mirror 111. Thus, the lights emitted from the three laser light sources 13a, 13b, and 13c may be projected on the display region 21 of the windshield 2. The operation part 12 may be provided in order to accept various operation instructions from the user for the projector unit 1 such as an operation to turn on the power of the HUD device 100 (projector unit 1), an operation to change a display color of the predetermined information 300 projected on the windshield 2 to a desired display color, and the like.

The three laser light sources 13a, 13b, and 13c may be configured so as to emit blue laser light, green laser light, and red laser light, respectively. The blue laser light emitted from the laser light source 13a may be irradiated onto the MEMS mirror 111 passing through the beam splitter 14a and the lens 15. The green laser light and the red laser light emitted from the laser light sources 13b and 13c, respectively, may pass through the beam splitter 14b, while also passing through the beam splitter 14a and the lens 15 thereafter, before being irradiated onto the MEMS mirror 111. Red, green, and blue colors are an example of "the first color," "the second color," and "the third color" of the present invention, respectively. The display controller 16 may comprise an image processor 161, a light source controller 162, a LD (laser diode) driver 163, a mirror controller 164, and a mirror driver 165. The projector unit 1 may be configured so as to output the predetermined information 300 based on an image signal (for example, image signal sent from the car navigation (image signal that relates to the route information)) input to the image processor 161. The light source controller 162 may be configured to be able to drive the three laser light sources 13a, 13b, and 13c independently from one another via the LD driver 163. More specifically, the light source controller 162 may be configured to control the LD driver 163 so that laser lights that correspond to each pixel within the display region 21 are irradiated from the three laser light sources 13a to 13c. The mirror controller 164 may be configured to be able to drive the MEMS mirror 111 of the laser light scanner 11 via the mirror driver 165. The camera 17 may be configured so as to detect the color (background color) of background 400 corresponding to the display region 21 where the predetermined information 300 is displayed.

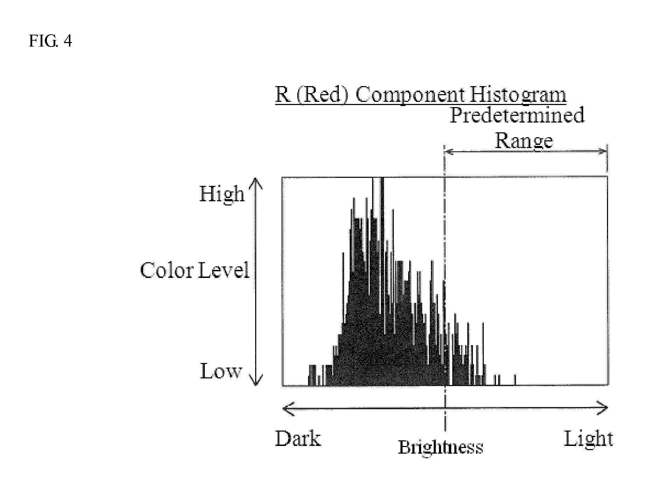

The main CPU 18 according to one or more embodiments is configured so as to control the display of the predetermined information 300 with display color based on the color of the background 400 (background color) detected by the camera 17 by using a laser light source other than the laser light source that has degraded or failed when any one laser light source has degraded or failed within the three laser light sources 13a, 13b, and 13c. More specifically, the main CPU 18 may be configured to be able to detect any one of three laser light sources 13a, 13b, and 13c that is no longer able to emit the desired light due to degradation or failure. Then, the main CPU 18 may control the display of the predetermined information 300 with the display color of a different color system from the color of the background 400 by using another usable laser light source when any one laser light source within the three laser light sources 13a, 13b, and 13c is no longer able to emit the desired light.
Further, the main CPU 18 according to one or more embodiments may be configured so as to classify colors of the detected background 400 into any color system of red (R), green (G), and blue (B) when any one of the laser sources within the three laser light sources 13a to 13c is no longer able to emit the desired light. The main CPU 18 may be configured, as illustrated in, for example, FIGS. 4 to 6, so that the colors of the background 400 are separated into each color component of red (R), green (G), and blue (B), and the colors of the background 400 are classified into any one of color systems of red (R), green (G), and blue (B) based on the relationship between contrast and color levels (gradation) of each of the three color components separated.

Specifically, the main CPU 18 according to one or more embodiments may determine as the color system of the color of the background 400, the color where a ratio of the color level of the bright side is the highest (greatest) within the three colors (RGB) in the predetermined range (for example, in the range of the side brighter than the intermediate position of the full range (right side of FIGS. 4 to 6)) that is located at the brighter side which has a large effect on the colors of the background 400 within the full range of the contrast. The main CPU 18 may determine the color where the ratio of the color level of the bright side is the highest (greatest) as the color system of the background based on the data in the predetermined range described above without taking into account (ignoring) the data in the range other than the predetermined range described above (for example, a range of the side darker (left side of FIGS. 4 to 6) than the intermediate position of the full range). For example, in the example illustrated in FIGS. 4 to 6, red (R) may be low in the color level within the predetermined range, and green (G) may be high in the ratio of the color level weighted towards the dark side (intermediate position side of the contrast full range) within the predetermined range. Meanwhile, blue (B) may be high in the ratio of the color level around the center position within the predetermined range, and blue (B) may be the color where the ratio of the color level in the bright side is the highest (greatest) within RGB. Therefore, in this example, the main CPU 18 may classify (determines) the color system of the color of the background 400 as blue (B).

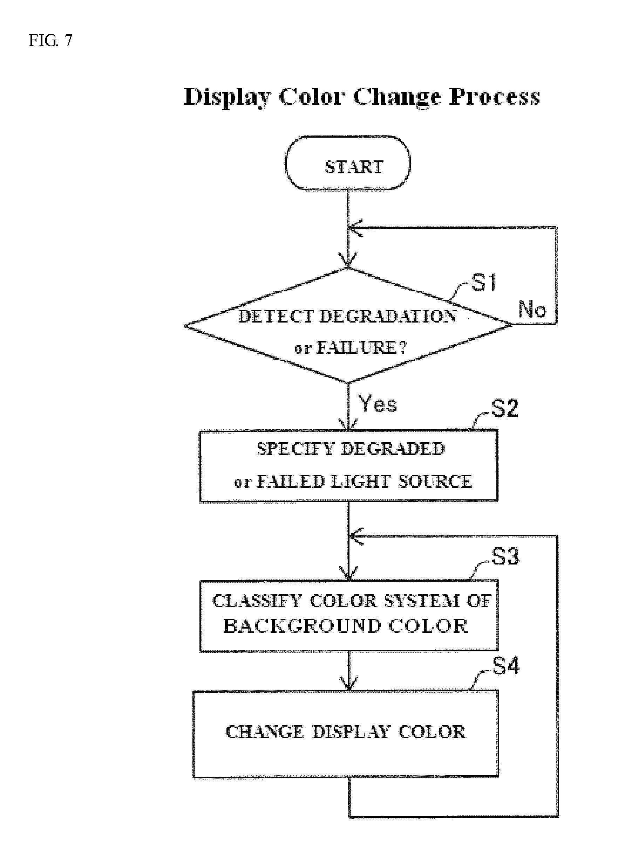

Further, the main CPU 18 according to one or more embodiments may be configured so that the display color of a predetermined information 300 is determined to be a display color of a color system different from the color system of the color of the background 400 within RGB based on the color system of the color (background color) of the classified background 400. The main CPU 18 may determine the display color of the predetermined information 300 so as to avoid the color of the background 400 and the display color of the information 300 from being similar colors.
Next, a description of the display color change process performed by the main CPU 18 of the HUD device 100 according to one or more embodiments will be given in reference to FIG. 7. First, in step S1, judgment may be made whether or not any one of the laser light source within the three laser light sources 13a, 13b, and 13c is no longer able to emit the desired light due to degradation or failure, and this judgment is repeated until any one of the laser light source is no longer able to emit the desired light. When any one of the laser light source is no longer able to emit the desired light, the main CPU 18 may identify in step S2 which one of laser light source within the three laser light sources 13a, 13b, or 13c has degraded or failed.
Subsequently, the main CPU 18 may classify (identifies) a color system of the color (background color) of the background 400 in step S3. More specifically, the main CPU 18 may classify the color of the background 400 detected by the camera 17 into any one of color system of red (R), green (G), and blue (B) based on the relationship of the contrast and each of the color levels (gradation) of RGB. Then, in step S4, the main CPU 18 may control the display of the predetermined information 300 in a display color of a different color system from the color of the background 400 by using a usable laser light source other than the laser light source that is no longer able to emit the desired light.
When a laser light of one of the laser lights between the usable laser light sources is a similar color as the color of the background 400, the main CPU 18 may display the predetermined information 300 in a display color of a different color system from the color of the background 400 by using the other laser light source. For example, if the laser light source 13c that emits a red (R) laser light is no longer able to emit the desired light due to degradation or failure, and the color system of the color of the background 400 is blue (B), the main CPU 18 may display the predetermined information 300 with green color (G) that is a different color system from the color of the background 400 by using the laser light source 13b that emits a green (G) laser light between the usable laser light sources 13a and 13b. Furthermore, if laser lights of both of the usable laser light sources are different from the color of the background 400, the main CPU 18 may display the predetermined information 300 with the display color of the color system having the greater wavelength. That is, the main CPU 18 may control the display of the predetermined information 300 with the display color of the color system having greater wavelength by the usable laser light source when display colors of a plurality of color systems that are different from the color of the background 400 are displayable. For example, if the laser light source 13a that emits a blue (B) laser light is no longer able to emit the desired light due to degradation or failure, and the color system of the color of the background 400 is blue (B), the main CPU 18 may display the predetermined information 300 with red color (R) that is the color system having a greater wavelength by using the laser light source 13c corresponding to red (R) between the usable laser light sources 13b and 13c.

Thus, the main CPU 18 may display the predetermined information 300 in the display color of a different color system from the color of the background 400 according to the changing color of the background 400 as needed by repeating the operation of steps S3 and S4.
According to one or more embodiments of the present invention, when any one laser light source within the three laser light sources 13a to 13c is no longer able to emit the desired light, the main CPU 18 may control the display of the predetermined information 300 in a display color based on the color of the background 400 (background color) detected by the camera 17. This may be done by using another laser light source to change the display color of the predetermined information 300 to a display color that is easily visible against the changed color of the background 400 by using another laser light source even when any one laser light source is no longer able to emit the desired light. Accordingly, even when any one laser light source is no longer able to emit the desired light when the color of the background 400 is changed, it may suppress problematic visibility of the predetermined information 300. According to one or more embodiments of the present invention, the main CPU 18 may be configured so as to control the display of the predetermined information 300 in the display color of the color system different from the color of the background 400 determined based on the color of the background 400 detected by the camera 17 by using another laser light source when any one laser light source within the three laser light sources 13a to 13c is no longer able to emit the desired light. Accordingly, when any one laser light source is no longer able to emit the desired light, the display color of the predetermined information 300 may be changed to a display color of a different color system where a visual difference is more emphasized against the changed color of the background 400. Therefore, even when any one laser light source is no longer able to emit the desired light when the color of the background 400 changes, the predetermined information 300 may be displayed with the display color easily recognized visually.

Furthermore, according to one or more embodiments of the present invention, the main CPU 18 may be configured as described above so as to classify the color of the background 400 detected by the camera 17 into any color system of RGB when any one laser light source within the three laser light sources 13a to 13c is no longer able to emit the desired light and then determine the display color of the predetermined information 300 in a display color of any color system of RGB different from the color system of the classified color or the background 400. Accordingly, even when any color of RGB is no longer able to be displayed because any one laser light source is no longer able to emit the desired light, the color of the background 400 may be classified into any color system of RGB. Therefore, the predetermined information 300 can be easily displayed in the display color of the color system different from the color of the background 400 by using the light source other than the predetermined light source.
Moreover, according to one or more embodiments of the present invention, the main CPU 18 may be configured as described above so that the color of the background 400 detected by the camera 17 is separated into each color component of RGB and classified into any color system of the RGB of the color of the background 400 detected by the camera 17 based on the relationship between the contrast and the color level of each of separated RGB. Accordingly, the color system of the color of the background 400 may be easily determined based on the relationship between the contrast and the color level of each of the color components of RGB. In addition, according to one or more embodiments of the present invention, the main CPU 18 may be configured as described above so as to control the display of the predetermined information 300 in the display color of the color system having a greater wavelength within RGB when display colors of a plurality of color systems that are different from the color of the background 400 are displayable. Accordingly, when the predetermined light source is no longer able to emit the desired light, the predetermined information 300 may be displayed with the display color of the color system having higher visibility and greater wavelength within the display colors of the color system that is different from the color of the background 400. Therefore, the visibility of the predetermined information 300 may be improved when any one laser light source is no longer able to emit the desired light.

### (Second Example)

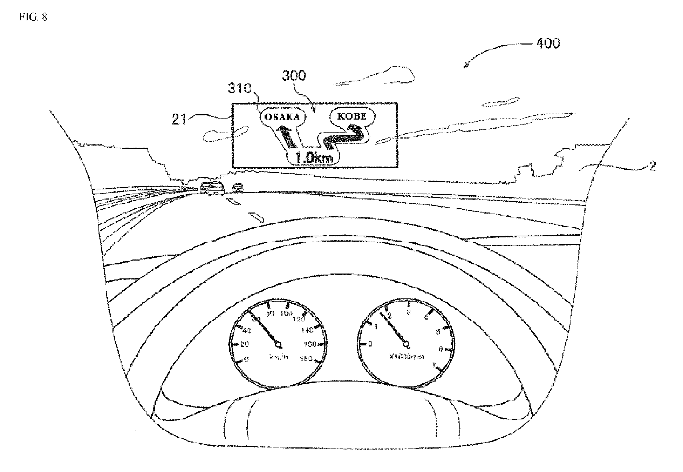

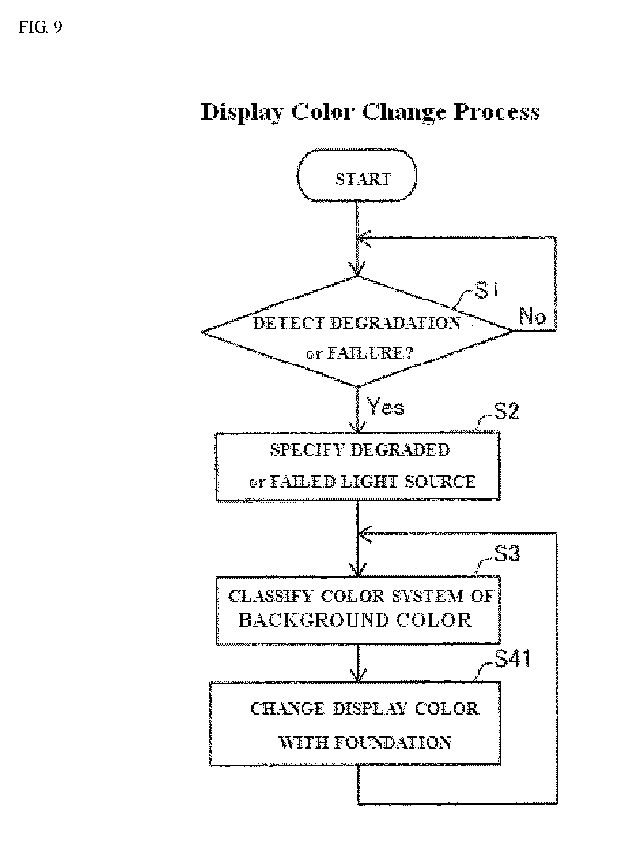

Next, a configuration of a HUD (head-up display) device 100 according to one or more embodiments of the present invention will be described in reference to FIG. 8. In the second example, a description will be given of a configuration that differs from the first example for displaying only the predetermined information 300 in the display color of the color system that differs from the color of the background 400, and displays the foundation 310 with a similar color (like color) as the color of the background 400 for displaying the predetermined information 300 in the display color of the color system that differs from the color of the background 400 by superimposing on the foundation 310.
The main CPU 18 of the HUD device 100 according to one or more embodiments of the present invention may be configured so as to control the display of the predetermined information 300 in a display color based on the color of the background 400 (background color) detected by the camera 17 by using another laser light source usable when any one laser light source is no longer able to emit the desired light due to degradation or failure within the three laser light sources 13a, 13b, and 13c. More specifically, as illustrated in, for example, FIG. 8, when any one laser light source is no longer able to emit the desired light within the three laser light sources 13a through 13c, the main CPU 18 may display the foundation 310 with a display color of the similar color (like color) as the color of the background 400 and also controls the display of the predetermined information 300 with the display color of a different color system from the color of the background 400 and the foundation 310 by superimposing on the foundation 310. The foundation 310 may have an external shape within the display region 21 along the display shape of the predetermined information 300 so as to surround the predetermined information 300. Accordingly, the display region of the foundation 310 may be suppressed from becoming excessively large. Next, a description of the display color change process performed by the main CPU 18 of the HUD device 100 according to one or more embodiments of the present invention will be given in reference to FIG. 9. Here, operations that are similar to the display color change process of FIG. 7 will be denoted by the same step number shown in FIG. 9 for convenience, and descriptions thereof will be omitted.
Subsequent to steps S1 to S3, in step S 41, the main CPU 18 according to one or more embodiments may display the foundation 310 in a display color of the similar color system (like color system) as the color of the background 400 by using a usable laser light source other than the laser light source that is no longer able to emit the desired light, and displays the predetermined information 300 in the display color of the color system that differs from the color of the background 400 by superimposing on the foundation 310.
In this case, when a laser light of one of the laser light sources within the usable laser light sources is a similar color as the color of the background 400, the main CPU 18 may display the foundation 310 in a display color of the same color system as the color of the background 400 by using the other laser light source. Further, the main CPU 18 may display the predetermined information 300 in a display color of a different color system from the color of the background 400 and the foundation 310 by using the other laser light source of the color system that differs from the color of the background 400 from among the usable light sources. For example, if the laser light source 13c that emits a red (R) laser light is no longer able to emit the desired light due to degradation or failure, and the color system of the color of the background 400 is blue (B), the main CPU 18 may display the foundation 310 in a blue color (B) of the same color system as the color of the background 400 by using one of the laser light sources 13a that emits a blue (B) laser light from among the usable laser light sources 13a and 13b. Furthermore, the main CPU 18 may display the predetermined information 300 in a green color (G) of the color system different from the color of the background 400 and the foundation 310 by superimposing on foundation 310 of the blue color (B) by using the other laser light source 13b that emits the green (G) laser light. The foundation 310 is may be displayed in an opaque (impermeable) state instead of translucent (semi-permeable). In other words, the main CPU 18 may control so as to display the foundation 310 in a solid opaque state. Accordingly, the predetermined information 300 may stand out more and be easily recognized visually.
Furthermore, if laser lights of both of the usable laser light sources are a different color system from the color of the background 400, the main CPU 18 may display only the predetermined information 300 in the display color of the color system having the greater wavelength without displaying the foundation 310. For example, if the laser light source 13a that emits a blue (B) laser light is no longer able to emit the desired light due to degradation or failure, and the color system of the color of the background 400 is blue (B), the main CPU 18 may display the predetermined information 300 in a red color (R) that is the color system having a greater wavelength by using the laser light source 13c corresponding to red (R) from among the usable laser light sources 13b and 13c without displaying the foundation 310. Then, the main CPU 18 may display the predetermined information 300 in the display color of a different color system from the color of the background 400 according to the changing color of the background 400 as needed by repeating the operation of steps S3 and S41.
Other configurations of the second example are possible.
In the second example, the main CPU 18 according to one or more embodiments may be configured so as to control the display of the foundation 310 by superimposing on the background 400 in the display color of the color system (like color) same as the color of the background 400 (background color) and also controls the display of the predetermined information 300 in the display color of the color system different from the color of the back ground 400 by superimposing on the foundation 310 by using another laser light source when any one laser light source is no longer able to emit the desired light. Accordingly, the visibility of the predetermined information 300 may be improved when any one laser light source is no longer able to emit the desired light because the predetermined information 300 displayed in the display color of the color system different from the color of the background 400 can be emphasized by the foundation 310 of the same color system as the background 400.
Furthermore, the configuration according to one or more embodiments, in the same manner as in the first example, also can suppress problematic visibility of the predetermined information 300 by the main CPU 18 when any one laser light source is no longer able to emit the desired light when the color of the background 400 changes by using another laser light source to control the display of the predetermined information 300 in the display color based on the color of the background 400 (background color).
Other advantageous effects of the second example are similar to the first example described above.

### (Third Example)

Next, a configuration of a HUD (head-up display) device 100 according to one or more embodiments of the present invention will be described. In the third example, a description will be given of a configuration that differs from the first embodiment for displaying the predetermined information 300 in one display color of the color system that differs from the color of the background 400, and displays the predetermined information 300 in the display color of the color system that differs from the color of the background 400 by superimposing on the foundation 310.

The main CPU 18 of the HUD device 100 according to one or more embodiments of the present invention is configured so as to control the display of the predetermined information 300 in a display color based on the color of the background 400 (background color) detected by the camera 17 by using another laser light source usable when any one laser light source is no longer able to emit the desired light due to degradation or failure within the three laser light sources 13a, 13b, and 13c. More specifically, when any one laser light source is no longer able to emit the desired light within the three laser light sources 13a to 13c, the main CPU 18 may control the display of the predetermined information 300 while continuously and sequentially changing display colors in a color system that differs from the color of the background 400. The main CPU 18 may control the display of the predetermined information 300 so as not to be the same color system as the color of the background 400 by gradually changing the display color continuously by gradation of the color system that differs from the color of the background 400.

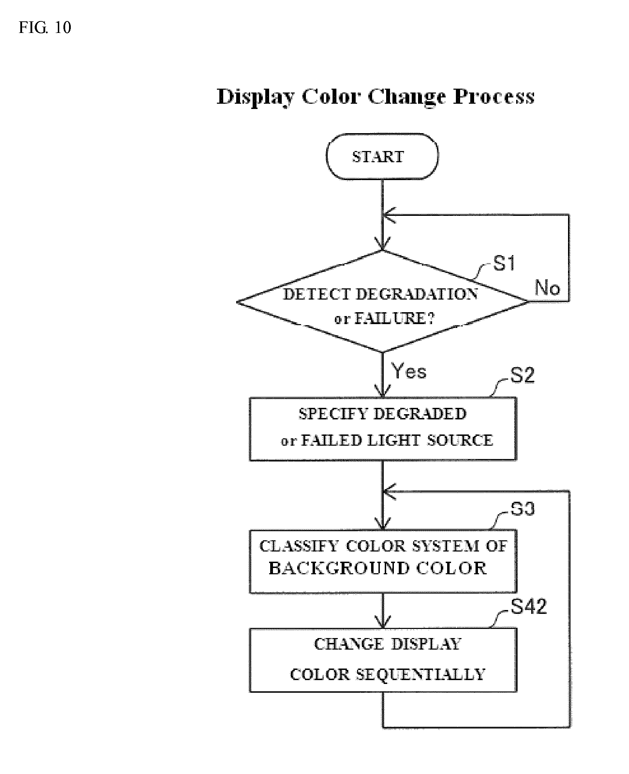

Next, a description of the display color change process performed by the main CPU 18 of the HUD device 100 according to one or more embodiments will be given in reference to, for example, FIGS. 10 to 12. Operations that are similar to the display color change process of the first embodiment illustrated in FIG. 7 will be denoted by the same step number in FIG. 10 for convenience, and descriptions thereof will be omitted.

Subsequent to steps S1 to S3, in step S42, the main CPU 18 may display the predetermined information 300 while continuously and sequentially changing the display colors in the color system that differs from the color of the background 400 by using usable laser light sources other than the laser light source that is no longer able to emit the desired light.

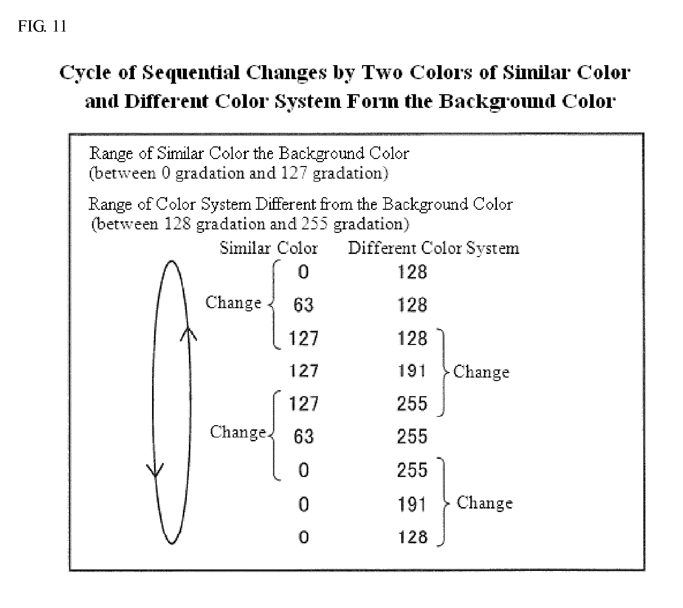

In this case, when one laser light source of the usable laser light sources is the similar color to the color of the background 400 as illustrated in, for example, FIG. 11, the main CPU 18 may change the gradation of one laser light source of the similar color to the color of the background 400 within a first range (for example between 0 gradation to 127 gradation) that is a low (small) side of within the full range (for example between 0 gradation and 255 gradation), and also change the gradation of other laser light source of the color system that differs from the color of the background 400 within a second range (for example, between 128 gradation and 255 gradation) that is a higher (larger) side than the first range within the full range (for example 0 gradation and 255 gradation). The first and the second ranges may be set so as not to overlap with each other. Accordingly, the predetermined information 300 may be displayed while continuously and sequentially changing the display color in the color system that differs from the color of the background 400 by using the laser light source having the similar color to the background 400, and the light source of the color system that differs from the color of the background 400. Furthermore, the main CPU 18 according to one or more embodiments may maintain the gradation of one of the laser light sources at either value of the maximum or minimum value within the corresponding range, and at the same time controls the gradation of the other laser light source to change continuously and sequentially by one gradation within the corresponding range.

For example, if the laser light source 13c that emits a red (R) laser light is no longer able to emit the desired light due to the degradation or failure, and the color system of the color of the background 400 is blue (B), the main CPU 18 may change the display color of the predetermined information 300 continuously and sequentially in the color system that differs from the color of the background 400 by changing the gradation of the laser light source 13a that emits laser light of a similar color to the color of the background 400 within the first range (for example, between 0 gradation and 127 gradation), and also changing the gradation of the laser light source 13b that emits a laser light of a color system that differs from the color of the background 400 within the second range (for example, between 128 gradation and 255 gradation).

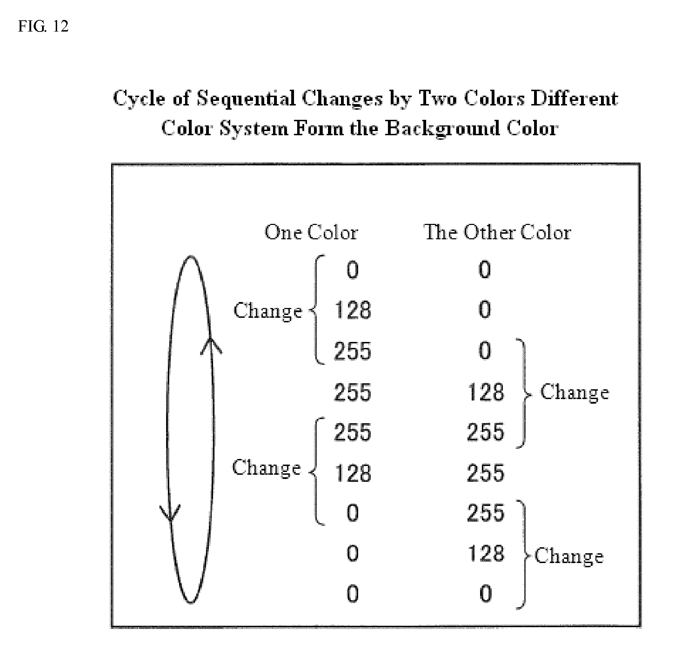

Further, if both laser lights of the usable laser light sources are color systems that differ from the color of the background 400, as illustrated in, for example, FIG. 12, the main CPU 18 may continuously and sequentially change the display color of the predetermined information 300 in the color system that differs from the color of the background 400 by changing the gradations of both of the usable laser light sources in the full range (for example, between 0 gradation and 255 gradation). The main CPU 18 according to one or more embodiments of the present invention may control and maintain the gradation of one of the laser light sources at either value of the maximum or minimum value, and also change the gradation of the other laser light source continuously and sequentially by one gradation. For example, if the laser light source 13a that emits a blue (B) laser light is no longer able to emit the desired light due to the degradation or failure, and the color system of the color of the background 400 is blue (B), the main CPU 18 may change the display color of the predetermined information 300 continuously and sequentially in the color system that differs from the color of the background 400 by changing respectively both gradations of the laser light sources 13b and 13c that emit laser lights that differ from the color of the background 400 in the full range (for example, between 0 gradation to 255 gradation).

Then, the main CPU 18 may control and change the display color of the predetermined information 300 in the color system that differs from the color of the background 400 according to the changing color of the background 400 as needed by repeating the operation of steps S3 and S42.

Other configurations of the third example are possible.

In the third example, the main CPU 18 may be configured so as to control the display of the predetermined information 300 in the display color of the color system that differs from the color of the background 400 (background color) by using another laser light source when any one laser light source is no longer able to emit the desired light. Accordingly, even when any one light source is no longer able to emit the desired light, the user may visually recognize the predetermined information 300 more reliably because the display color of the predetermined information 300 changes sequentially against the changing color of the background 400.

Furthermore, the configuration, according to one or more embodiments of the present invention, may suppress problematic visibility of the predetermined information 300 by the main CPU 18 when any one laser light source is no longer able to emit the desired light when the color of the background 400 changes by using another laser light source to control the display of the predetermined information 300 in the display color based on the color of the background 400 (background color).

Other advantageous effects of the third example are possible.

The various embodiments herein disclosed are examples on all points and should be considered as not restrictive. The scope of the present invention is indicated by the scope of the claims and not by the descriptions of the examples described above and furthermore includes all equivalent meanings of the scope of the claims and all modifications within the scope of the claims.

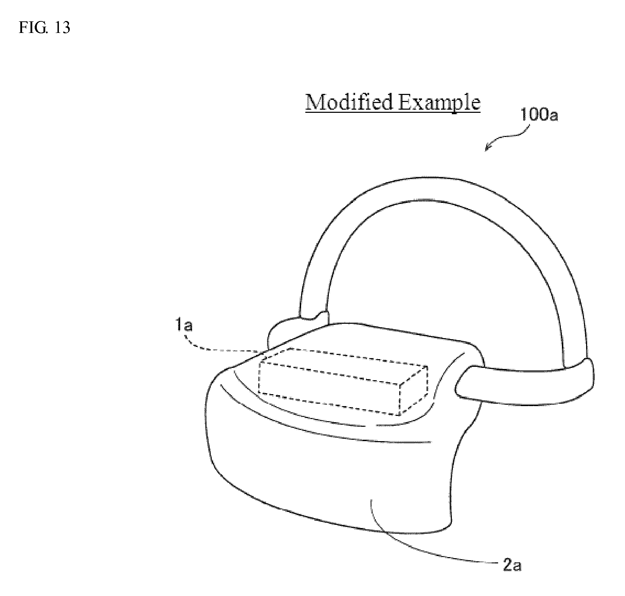

For example, the examples have illustrated where an HUD (head-up display) device is mounted in a vehicle; however, the present invention is not restricted thereto. The present invention may be mounted in transportation equipment, such as an airplane, other than a vehicle. Further, as illustrated in a modified example illustrated in FIG. 13, the present invention may be applied to a HUD device 100a that is able to be worn on the head of the user comprising a projector unit 1a and a transparent display panel 2a that is arranged in the front of line of sight of the user.

Furthermore, in the examples described above, a camera is illustrated as a detection unit of the present invention; however, the present invention is not limited thereto. According to one or more embodiments of the present invention, a color discrimination sensor or the like may be used as the detection unit other than cameras as long as the color of the background to be visibly recognizable to the user via the transparent panel can be detected.

Moreover, in view of the above, an example is given to display the predetermined information in the display color that differs from the color of the background by using one laser light source that emits a laser light of the color system that differs from the color of the background; however, the present invention is not limited thereto. The present invention may display the predetermined information in a display color of the color system that differs from the color of the background by using a plurality of laser light sources.

In addition, one or more embodiments of the present invention described above illustrated a configuration where the display color of the predetermined information is changed sequentially when a laser light of one of laser light sources is the similar color to the background color between the usable laser light sources by changing the gradation of one laser light source within the first range (for example, 0 gradation and 127 gradation) that is the low (small) side, and also changing the gradation of the other laser light source of the color system that differs from the background color within the second range (for example, between 128 gradation and 255 gradation) that is higher (larger) than the first range; however, the present invention is not limited thereto. The present invention may have a configuration where the display color of the predetermined information is changed sequentially so that a color of a similar color to the background color and the color of the color system that differs from the background color are the opposite distribution to the histogram distribution of the background color based on the relationship of each of the contrast (histogram distribution) (refer to FIGS. 4 to 6) and the color level (gradation) of the color component of the background color.

Furthermore, according to one or more embodiments of the present invention, an example was given in which the display color of the predetermined information is changed continuously and sequentially; however, the present invention is not limited thereto. According to one or more embodiments of the present invention, the display color of the predetermined information may be changed sequentially in steps by four colors of color systems that differ from the background color. For example, the display color of the predetermined information may be sequentially changed in steps by the four colors of the color system that differs from the color of the background among the displayable colors as the display color of the predetermined information.

Moreover, in the examples described above, a configuration provided with three laser light sources was illustrated; however the present invention is not limited thereto. A configuration may comprise four or more laser light sources in the present invention.

Also, in the examples described above, the laser light source was illustrated the light source of the present invention; however, the present invention is not limited thereto. A light source other than the laser light source may be the light source in the present invention.

Further, in the examples described above, red (R), green (G), and blue (B) were illustrated as the first, second, and third colors, respectively, of the present invention; however the present invention is not limited thereto. The first, second, and third colors of the present invention may be colors other than red (R), green (G), and blue (B) respectively.

In addition, in the examples described above, the process of the controller of the present invention was described with reference to a flowchart of a flow driven for performing the process in order according to the processing flow for convenience of explanation; however the present invention is not limited thereto. In the present invention, the process operation of the controller may be performed by an event driven processing that performs for each event. In this case, it may be performed in full in event driven, or a combination of event driven and flow driven. Furthermore, those of ordinary skill in the art would appreciate that certain "units" of one or more embodiments of the present invention may be implemented by a circuit, processor, etc. using known methods. Accordingly, the scope should be limited only by the attached claims.

### [Explanations of the Reference Numerals]

- 2: windshield (transparent display panel)
- 2a: transparent display panel
- 11: laser light scanner (projection unit)
- 13a, 13b, 13c: laser light source (light source)
- 17: camera (detection unit)
- 18: main CPU (controller)
- 100, 100a: HUD device
- 300: predetermined information
- 400: background

## Claims

1. A head-up display device (100, 100a) comprising:
a projection unit (11) configured to project predetermined information (300) on a transparent display panel (2a) by superimposing on a background (400) that is visible to a user viewing the transparent display panel (2a) placed in front of a line of sight of the user;
three light sources (13a, 13b, 13c) that emit lights of differing colors onto the transparent display panel (2a), wherein one of the three light sources (13a, 13b, 13c) is a predetermined light source;
a detection unit (17) configured to detect a background color that is visible when viewing the transparent display panel (2a); and
a controller (18) that controls a display of the predetermined information (300) using a display color in correspondence to the background color detected by the detection unit (17), using a light source other than the predetermined light source when the predetermined light source is no longer able to emit a desired light.

2. The head-up display device (100, 100a) according to claim 1, wherein the controller (18) controls the display of the predetermined information (300) using a display color of a different color system from the background color in correspondence to the background color detected by the detection unit (17), using the light source other than the predetermined light source when the predetermined light source is no longer able to emit a desired light.

3. The head-up display device (100, 100a) according to claim 2, wherein the three light sources (13a, 13b, 13c) emit at least a first color, a second color, and third color of light, respectively, and
when the predetermined light source is no longer able to emit a desired light, the controller classifies the background color detected by the detection unit (17) into color systems of one of the first color, the second color, and the third color, and determines the display color of the predetermined information (300) to be any one of the first color, the second color, and the third color that differs from that of the classified background color.

4. The head-up display device (100, 100a) according to claim 3, wherein the controller (18) separates the background color detected by the detection unit (17) into color components of the first color, the second color, and classifies the third color and the background color detected by the detection unit (17) into one of the color systems of the first color, the second color, and the third color based on a relationship between a contrast and a color level of the first color, the second color, and the third color.

5. The head-up display device (100, 100a) according to claim 3 or 4, wherein the controller (18) controls the display of the predetermined information (300) using the display color of the color system having a larger wavelength when display colors of a plurality of color systems that differ from the classified background color within the colors of the first color, second color, and third color is displayable.

6. The head-up display device (100, 100a) according to any one of claims 2 to 5, wherein when the predetermined light source is no longer able to emit a desired light, the controller (18) controls the display to display the foundation by superimposing in the display color the same color system as that of the background detected by the detection unit (17), using the light source other than the predetermined light source and wherein the predetermined information (300) is displayed using the display color of the color system that differs from the background color by superimposing on the foundation.

7. The head-up display device (100, 100a) according to any one of claims 2 to 5, wherein when the predetermined light source is no longer able to emit a desired light, the controller (18) controls the control to display the predetermined information while sequentially changing display colors in the color system that differs from the background color detected by the detection unit (17), using the light source other than the predetermined light source.

8. The head-up display device (100,100a) according to any one precedent claims, wherein the detection unit (17) is a camera.

9. A method for displaying a head-up display device (100, 100a), comprising,
projecting predetermined information (300) on a transparent panel (2a) superimposed on a background that is visible to a user through the transparent panel (2a) placed in front of the line of sight of the user;
detecting a background color that is visible to the user viewing the transparent display panel (2a), and
displaying the predetermined information (300) using a display color based on the detected background color using a light source other than a predetermined light source when the predetermined light source is no longer able to emit a desired light, wherein the predetermined light source is one of three light sources.

10. The method according to claim 9, further comprising controlling the display of the predetermined information (300) using a display color of a different color system from the background color in correspondence to the detected background color, using the light source other than the predetermined light source when the predetermined light source is no longer able to emit a desired light.

11. The method according to claim 10, further comprising:
emitting at least a first color, a second color, and third color of light, respectively; and
when the predetermined light source is no longer able to emit a desired light, classifying the detected background color into color systems of one of the first color, the second color, and the third color, and determining the display color of the predetermined information to be any one of the first color, the second color, and the third color that differs from that of the classified background color.

12. The method according to claim 11, further comprising separating the detected background color into color components of the first color, the second color, and classifying the third color and the background color detected by the into one of the color systems of the first color, the second color, and the third color based on a relationship between a contrast and a color level of the first color, the second color, and the third color.

13. The method according to claim 11, further comprising controlling the display of the predetermined information (300) using the display color of the color system having a larger wavelength when display colors of a plurality of color systems that differ from the classified background color within the colors of the first color, second color, and third color is displayable.

14. The method according to claim 10, further comprising, when the predetermined light source is no longer able to emit a desired light, controlling the display to display the foundation by superimposing in the display color the same color system as that of the detected background, using the light source other than the predetermined light source, wherein the predetermined information is displayed using the display color of the color system that differs from the background color by superimposing on the foundation.

15. The method according to claim 10, further comprising, when the predetermined light source is no longer able to emit a desired light, controlling the display to display the predetermined information (300) while sequentially changing display colors in the color system that differs from the detected background color, using the light source other than the predetermined light source.
